# EUROPEAN PATENT APPLICATION

(11) **EP 1 180 741 A2**
(43) Date of publication of application: **20.02.2002**
(21) Application number: 01306921.6
(22) Date of filing: 14.08.2001
(51) Int. Cl.: G06F 17/60

(54) **Flexible system and method for standardizing communications and decision-making across multiple business processes**

(30) Priority: 15.08.2000 US 640169
(71) Applicant: ROHM AND HAAS COMPANY, Philadelphia, Pennsylvania 19106-2399 (US)
(72) Inventor: Boyce, Scott D., North Wales, PA 19454 (US); Khanna, Vijay K., Holland, PA 18966 (US); Shervin, Carl R., Warrington, PA 18976 (US); Stevens, Rita W., Glenside, PA 19038 (US); Barrett, James H., Feasterville, PA 19053 (US); Kirk, Andrea B., Ivyland, PA 18974 (US); Watson, William Martin, Jr., Hilltown, PA 18927 (US); Mehta, Mukul M., Westlake, OH 44145 (US); Corn, Jordan M., Hamilton Square, NJ (US); Petro, Anthony George, North Wales, PA 19454 (US); Wood, Robert S., Holland, PA 18966 (US)
(74) Representative: Jackson, Richard Eric

(57) **Abstract**

A technique and system are provided whereby modeling of decision-making in a business process, such as research and development, sales, accounting, engineering and human resources activities, is computer network-enabled whereby data communications, storage and processing of business process data is standardized. Automatic or manual inputs for a business process are standardized and updated centrally and continuously and automatically or manually input. Outputs or reports generated from the business process data storage may be automatically generated according to preset criteria or generated upon request. Because all of the processes are centrally managed, e.g., through a network, a plurality of business processes may be collectively or retrospectively analyzed e.g., to assess the accuracy of assumptions used during the progression of the processes. A virtual office is provided whereby members can enter data, information, documents and the like, which may be done on or off-line. Efficient progression of individual business processes, as well as effective management of a business process portfolio, e.g., optimizing of resource allocation, is thus . achieved.

## Description

### Background of the Invention

### Field of the Invention:

The present invention relates to a system and method for standardizing communications and decision-making across multiple business processes and for efficiently analyzing one or more business processes for decision-making and strategic planning purposes. More particularly, the present invention relates to a method and system for enabling computer network access to and standardizing communications for input, output, and storage of business process data in connection with one or more business processes. The present invention further relates to a method and system for continuously updating and processing the stored business process data so that business decisions may be made consistently across multiple projects so as to permit more flexible strategic planning within an organization or among a group of organizations.

### Description of the Prior Art:

Since its advent, the model of a standalone personal computer with removable storage media has had a great effect on the computer industry and has influenced the design of many computer system architectures and infrastructures. However, advances in storage solutions and complex computer systems have been occurring rapidly since the time of the first standalone computers. For example, the following are all examples of increased functionality that networked computer environments have evolved to possess: continued discovery of smaller integrated circuits and semiconductor chips capable of storing ever increasing quantities of data and processing data at rates/frequencies that continue to rise, increased bandwidth and data transfer rates possible with current computer networks and increased utilization of server computers in a network in connection with other computers, databases, applications and storage components of all types.

As a consequence, traditional standalone computing and storage models have been challenged. The widespread use of removable storage media, for example, has been challenged by the ability to remotely store files efficiently and inexpensively. For instance, today's storage devices can be connected to the computer system via a bus, or they can be connected to the computer system via wired or wireless networks. In addition, storage devices can be separate or co-located in a single cabinet, making remote storage practically an unlimited resource. Further, increased network activity alongside current storage techniques enable distributed access to centralized storage from a variety of remote or client locations. As different industries come to grips with the information age, traditional methods, processes, ways of conducting business and applications are being replaced by networked digital solutions that take full advantage of these advances in information technology. Business process data storage and management is one such area that has not yet leveraged and taken full advantage of computer technology.

A business process, as described herein, is any process, procedure, technique or method occurring in connection with the course of business operations for which one or more persons make decisions that are germane to the continuation of the process, procedure, technique or method. Examples of business processes might include software development, human resource operations such as the collection and maintenance of employee information, accounting operations such as the distribution of payroll or the collection and maintenance of customer billing data, research operations such as the development of new products and/or services, sales operations such as sales to customers or pricing optimizations, or management operations such as the review of Action in Progress (AIP) reports. As used herein, a work process is a type of business process that generally refers to a process in which management decision-making is tied to the progress of the project.

Traditionally, some enterprises have sought to standardize the progression of business processes by modeling the decision-making process for the business process, based on discrete stages of process development ranging from a beginning point to an endpoint. In the case of a product development process, decision-making may be modeled from the conception of an idea to the retrospective analysis of a product's marketplace fruition. Before a process reaches or progresses to the next level or stage, a gate or hurdle is encountered signifying a decision point. For example, some business processes base decision-making upon identifiable risk factors and the certainty with which the risk factors may be defined. Thus, the advancement of a business process may be controlled according to a model.

One type of business process that enterprises may undertake is research and development (R&D). Generally, with this type of process, a team of researchers working at the direction of a management team is presented with an idea or a problem to be solved, and the project team seeks to produce a useful and cost effective solution for the problem. R&D is one type of business process that proceeds through stages of development and decision points. At various points, data is produced by team members or from elsewhere that bears upon the overall development project. However, oftentimes, data entry for projects is not standardized or centralized and it is also very difficult for team members to view an instantaneous snapshot of a project or for project managers to extract current data about multiple projects. For example, the quarterly production and distribution of data about an enterprise's collective business processes, such as R&D projects, does not efficiently address the instantaneous need for information regarding multiple processes or any particular process.

For instance, in the context of R&D projects, if a marketing division determines with near absolute certainty that there is no end market for a particular idea, the enterprise can save valuable time and resources by abandoning the project before it reaches the next stage. If the marketing division determines that more data (about competitor's products, the viability or probability of producing an operable or successful product, etc.) is necessary, the project may or may not advance based on the enterprise's philosophy with respect to less than certain research and development efforts. If the marketing division determines with certainty that the potential product has excessive demand attached to it with handsome profit margins, the project may advance from one stage of development to the next stage of development. Marketing data is just one example of the types of factors that can be identified to aid in the decision-making process for a project. Currently, these types of decisions are made without the benefit of centralized business process data storage, and consequently the ability to normalize inputs, outputs, analysis and storage for such business processes as well as the ability to retrospectively analyze the process portfolio in real time would add greatly to the efficiency of business process performance. In this case, the real time routing of the marketing data into a portion of centralized storage allocated for the relevant project would make these data available to the process decision-makers immediately. Decision-makers, as used herein, refers to anyone involved in the business process whose input to the process may change the course of the project e.g., a management team that may cut the project, or a researcher who changes his or her research strategy based on another researcher's results. In addition, this business process data may then be processed for presentation at any level, for example, to streamline the amount of data presented to the decision-makers or to tailor the quality of the data presented. It would thus be desirable to take a snapshot of all processes to yield an instantaneous picture of any information germane to one or more business processes so as to allow real-time comparison across multiple processes.

One type of model that has been applied to such business process management is termed a stage/gate model. While no model can reduce decision-making uncertainty to zero, by setting rules that as a whole define the progress of a process through stages via gates or decision points, a stage/gate model helps to minimize the amount of guesswork and serves as a framework for decision-making.

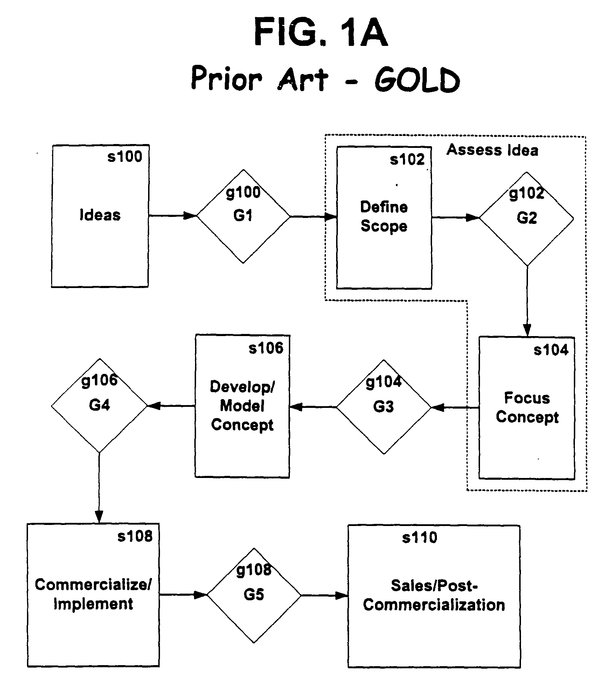

Exemplary prior art stage/gate, phase/gate, phase/review or serial process flows are shown in Figures 1A through 1E. Figure 1A illustrates what is referred to as the GOLD stage/gate model. The decision-making model of Figure 1A may be applied to any business or work process, but with exemplary reference to project (or product) development, in the idea stage s100, ideas are informally collected for advancement through the first gate g100 to a stage s102 where the idea's scope is defined. Thus, gates represent decision points where available data for an idea is examined to determine whether to advance to the next stage. Next, through gate g102, is a stage s104 wherein the concept is focused. Stages s102 and s104 may be thought of as part of a larger stage wherein the idea's viability is assessed. Through gate g104 is stage s106 wherein the idea, once assessed, is developed, the concept is modeled, and the like. Through decision gate g106 is stage s108 wherein the idea is commercialized/implemented. Through gate g108 is the final stage s110 wherein sales and post-commercialization review of the product are performed. In this fashion, a product's growth from an idea can be carefully examined in terms of atomic decision points and discrete stages of development.

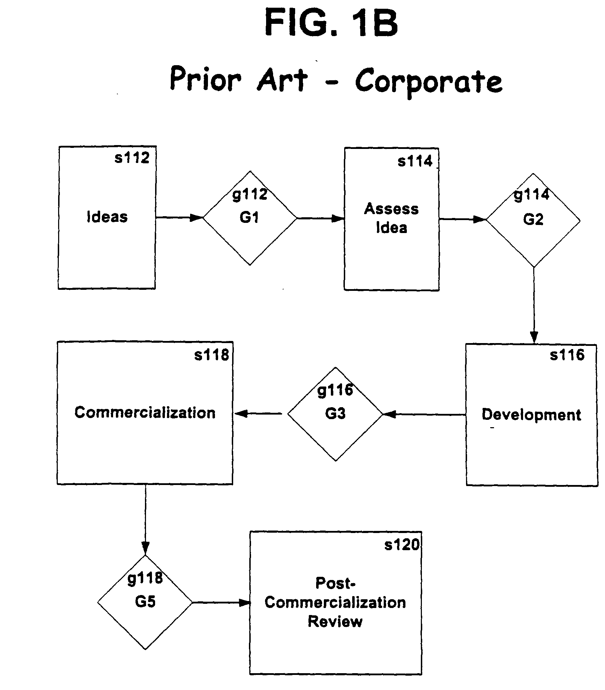

Figure 1B illustrates what is referred to as the Corporate stage/gate model. Stages s112, s114, s116, s118 and s120 include the generation of ideas, the assessment of ideas, the development of the idea, the commercialization of the developments and the post-commercialization review of the commercialized product, respectively. Gates g112, g114, g116 and g118 are decision points that separate the stages. If the risk or costs for an idea at any gate is too high, the next stage is not reached.

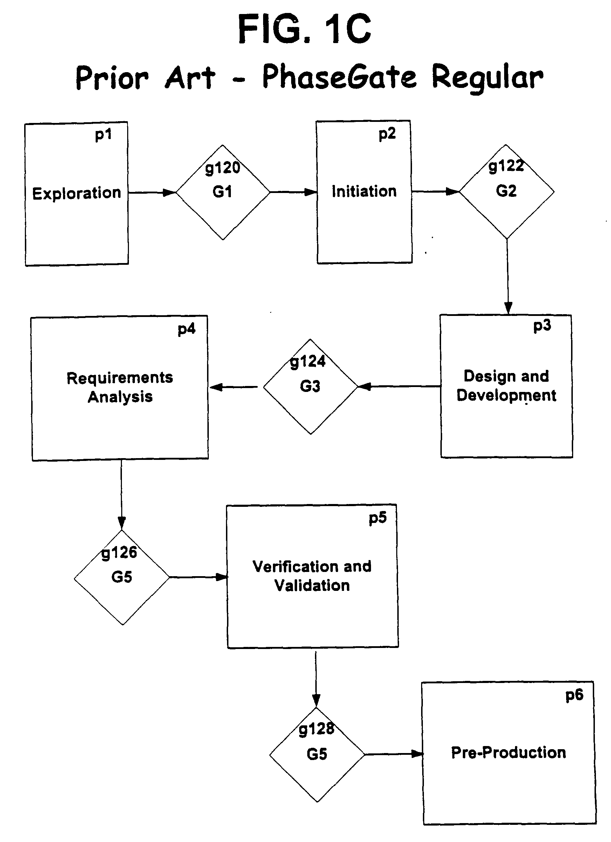

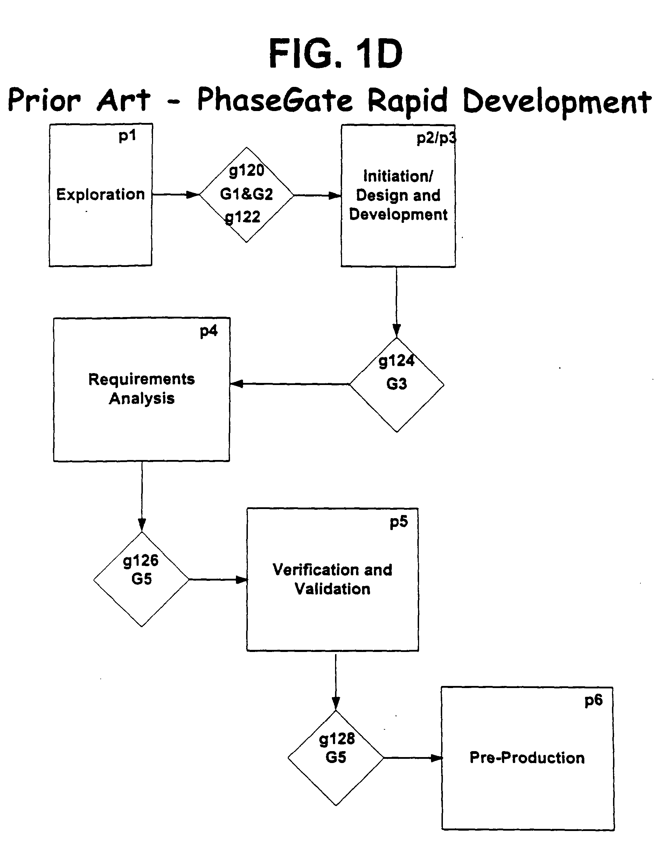

Figures 1C through 1E represent other phase/gate approaches. In a typical application of this approach as diagrammed in Figure 1C, the phases p1 to p6 for progression include exploration, initiation, design and development, requirements analysis, verification and validation, and pre-production, respectively. Gates g120, g122, g124, g126 and g128 separate these stages and serve as decision points for continuing or discontinuing the project. Figure 1D illustrates the same model on a fast track. Recognizing that decision points may take an arbitrary time to complete due to collection and analysis of data, the rapid development approach collapses g120 and g122 into a single gate and collapses p2 and p3 into a single phase whereby initiation procedures and the design and development of the product are combined for time and resource savings.

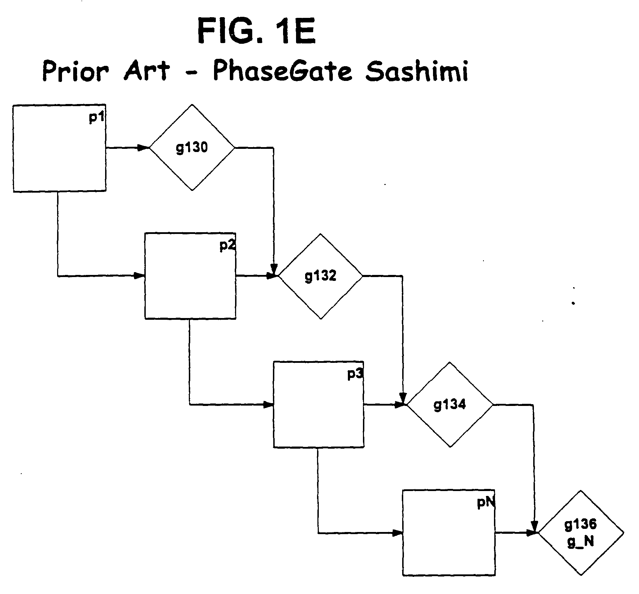

Figure 1E illustrates what is referred to as a sashimi phase/gate model. Here, gates g130, g132, g134 and g136 are cascaded along with phases p1 to pN, so that the next phase may begin while the previous phase is analyzed at a gate. Some product developments may be well suited to this model, especially when a wealth of experience suggests that there is a reasonable probability of continuing to the next phase. Thus, Figures 1A through 1E demonstrate exemplary stage/gate process flows; however, due to the individualized application of stage/gate models to enterprise projects by different business units, problems associated with the entry, coordination and standardization of data among team members persist with these models, especially when considered from the standpoint of a large organization having many different ongoing projects. Also, decision-making is often discretely performed, whereby data for a decision is not gathered until time comes for the decision, and consequently delays are introduced. Furthermore, resources, such as manufacturing or testing equipment, may be scarce within an organization and thus the parallel performance of many business processes that may require the same resources is generally not optimized i.e., unnecessary delays may be introduced by the scarcity of resources.

While email, video teleconferencing, and the like have improved communications among project team members, for example, a number of stifling inefficiencies remain. For example, document sharing techniques are generally not standardized. One team member might email a document or data to the other team members, but any changes or modifications to the document or data by any other team members can not be viewed by all unless someone collects all of the modifications and changes and redistributes the document. However, the redistributed document, even if renamed, may cause confusion among one or more team members as to which version is the most current one. Thus, when different business units maintain data in different places and according to different versions, this lends itself to inconsistent decision-making across business processes.

With respect to data entry issues for business processes, at the input side, data is not automatically input and thus must be manually entered. In addition to leading to inconsistent input, delays are introduced to produce data manually that could otherwise be generated automatically. As mentioned, those charged with inputting data generally or inevitably enter data that does not follow a standard format. Thus, with respect to the output side of inconsistent and manual data entry for business processes, a manager or other decision-maker may have to read through all of the textual or other types of varying input to discern what may be extracted as a whole or on a high level, which may also lead to inefficiency of the business process decision-making. Furthermore, without consistent and automatic input, decision-makers and business unit members are additionally charged with the task of determining whether data relating to business processes is current.

Additional problems may arise in connection with the coordination of a plurality of related activities. For example, in the context of product development, at some point in the process, it may be desirable to present a product to a plurality of customers, or more generally, it may be desirable to coordinate some aspect of the forward movement of the process. Currently, there is no standard or automatic way for coordinating these types of similar activities, such as the establishment and maintenance of customer relationships. Thus, it would be desirable to efficiently coordinate related activities for a plurality of customers.

For another example, generally a process, such as an R&D project, undergoes a number of hurdles before proceeding whereby the leaders of a business unit evaluate the progress of a project, likelihood of commercial success for a project, and the like. Such individualized decision-making, even when under the guidance of an enterprise policy, may yield inconsistent results when decisions made in connection with projects are examined side by side, since some managers may emphasize or ignore the importance of certain risk factors relative to emphases given to other projects by other managers. While on a case by case basis, individualized decision-making may produce good results, as a whole, uniform enterprise decision-making would produce economies of scale and streamlines the transformation of ideas into products or services for the marketplace, and reduce overall product and quality improvement cycles.

Further difficulties remain with respect to assigning access levels to information, initiation of projects, enterprise wide analysis of projects, generation of project portfolio documents, and the like. In short, it would be desirable to centralize the process by which an enterprise manages all processes in its process portfolio. As mentioned above, this centralized stored data would be beneficial for use with a variety of circumstances, including optimizing the allocation of time and scarce resources.

In consideration of the above insufficiencies associated with current project management systems, it would be desirable to enable centralized, networked uniformity for business processes within an enterprise. It would be further advantageous to standardize computerized data entry for association with enterprise projects. For example, it would be advantageous to enable networked access to and application of stage/gate modeling techniques chosen by an enterprise to the enterprise's processes and their progress cycles. It would be still further advantageous to provide for the automatic formatting and delivery of certain types of data to a storage space allocated for a process, so that automatic standardization, collection and processing of data used for subsequent analysis or presentation may be performed in accordance with such a business process. It would be still further advantageous to provide a virtual office for team members to enter and share data, information and documents. It would be still further advantageous to automatically generate standardized outputs and reports from a process data store, such as a stage/gate project data storage unit, that reflect the progress or other aspects of a project or multiple projects to business managers and/or other decision-makers. It would be further advantageous to assign different access levels so that different types of information may be displayed to different entities, based upon the characteristics of the entities. The present invention has been developed in consideration of these and other needs in the art relating to the computer network enabling of business processes.

### Summary of the Invention:

The present invention relates to business process management in an enterprise. A technique and system are provided whereby modeling of decision-making in a business process, such as research and development, sales, accounting, engineering and human resources activities, is computer network-enabled whereby data communications, storage and processing of business process data is standardized. Inputs for a business process are standardized, updated centrally and continuously and automatically or manually input. Outputs or reports generated from the business process data storage may be automatically generated according to preset criteria or generated upon request. Because all of the processes are centrally managed, e.g., through a network, a plurality of business processes may be collectively or retrospectively analyzed e.g., to assess the accuracy of assumptions used during the progression of the processes. A virtual office is provided whereby members can enter data, information, documents and the like, which may be done on or off-line. Efficient progression of individual business processes, as well as effective management of a business process portfolio, e.g., optimizing of resource allocation, is thus achieved. In one embodiment, the system includes inputting business process data from cross-functional data entry sources, storing the business process data in a database in a format tailored to the business process, processing the business process data based upon predetermined rules and decision-making criteria designed to streamline the business process, and outputting standardized/processed business process data to client computers based upon user access levels.

Other features of the present invention are described below.

### Brief Description of the Drawings:

The system and methods for providing computer networked business process management and coordination are further described with reference to the accompanying drawings in which:
Figs. 1A through 1E are block diagrams representing exemplary prior art stage/gate models.
Fig. 2 is a block diagram representing an exemplary network environment with a server in connection with which the method and system of the present invention may be implemented.
Fig. 3 is a block diagram describing an exemplary flow of inputs to and outputs from a database in accordance with the process management techniques of the present invention.
Figs. 4A and 4B are block diagrams illustrating exemplary inputs, outputs and storage of business process data for the business process management system of the present invention.
Fig. 5 is a diagram representing exemplary inputs and outputs of software for the business process management system of the present invention.
Fig. 6 is a diagram representing a technique for modifying the software of the present invention to accommodate alteration of the software based on use analysis.

### Detailed Description of Preferred Embodiments:

The present invention relates generally to an enterprise's oversight and management of ongoing processes in a portfolio such as a project portfolio, wherein inputs and outputs to a system are centrally managed and processed, and decision-making for the advancement of processes is normalized according to preset criteria, such as identifiable risk factors. In the context of research projects that follow a stage/gate model, decision-making, inputs and outputs for a project or for multiple projects may be standardized according to the stage/gate approach utilized. The present invention may be utilized in conjunction with a computer network environment, wherein users of client machines including hand-held devices, telephones, personal computers, televisions and the like may have access to and add to a project's associated information online or off-line according to various access levels. Standardized process portfolio reports can be automatically generated or requested to quickly ascertain the status of a given process or processes, and the status/demographics/ statistics of the enterprise's various processes more generally.

The present invention enables efficient knowledge management whereby not only are individual decisions simplified by the collection of relevant data for a particular decision, but due to the way data may be subsequently processed, the how and why decisions are made is also captured because each time a decision is made, there is a record of its surrounding circumstances that can be normalized against other similar or dissimilar decisions. The system of the present invention enables more efficient management of risk by giving decision-makers the best view of the business process data without unnecessary detail, although the detail is readily available if desired. Also, since teams and decision-makers may come from different fields and disciplines, such as is the case for consultants, developers, researchers, managers and the like, the present invention coordinates and standardizes the flow of information for business processes across disciplines.

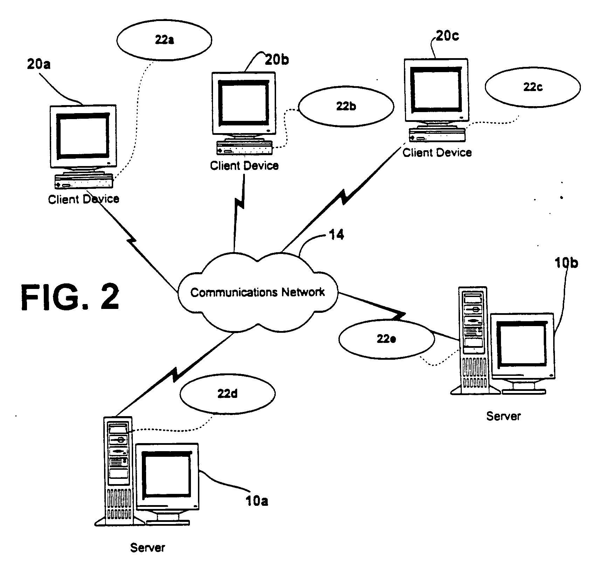

The present invention thus describes methods and techniques that may be used in a computer network environment so that business process management is made uniform across an enterprise's processes. Figure 2 illustrates an exemplary network environment, with one or more servers in communication with client computers via a network, in which the present invention may be employed. As shown, a number of servers 10a, 10b, etc., are interconnected via a communications network 14 (which may be a LAN, WAN, intranet or the Internet) with a number of client computers 20a, 20b, 20c, etc. In a network environment in which the communications network 14 is the Internet, for example, the servers 10 can be Web servers with which the clients 20 communicate via any of a number of known protocols such as hypertext transfer protocol (HTTP). A secure enterprise intranet may also be employed for greater control over security and access to the enterprise's confidential portfolio of business processes, such as research projects.

Each client computer 20 and server computer 10 may be equipped with various application program modules, other program modules and program data, and with connections or access to various types of storage elements or objects, across which files or data may be stored or from which files and data may be retrieved for further processing or output. For instance, software 22a, 22b, 22c, etc., such as applications or other client bits, may be stored on client devices 20a, 20b, 20c, etc. for receiving and standardizing inputs and outputs for business processes in accordance with the present invention. Software 22d, 22e, etc. may be stored on servers 10a, 10b, etc. for performing storage, access, updating and processing of business process data.

Thus, the present invention can be utilized in a computer network environment having client computers for accessing and interacting with the network and a server computer for interacting with client computers. In accordance with a preferred embodiment of the present invention, software resident in a centralized server system operates to manage and coordinate business processes, such as R&D projects using a stage/gate model. The techniques and communications used incident to the present invention can be implemented in a variety of network or system architectures, and thus should not be limited to any particular architecture or format.

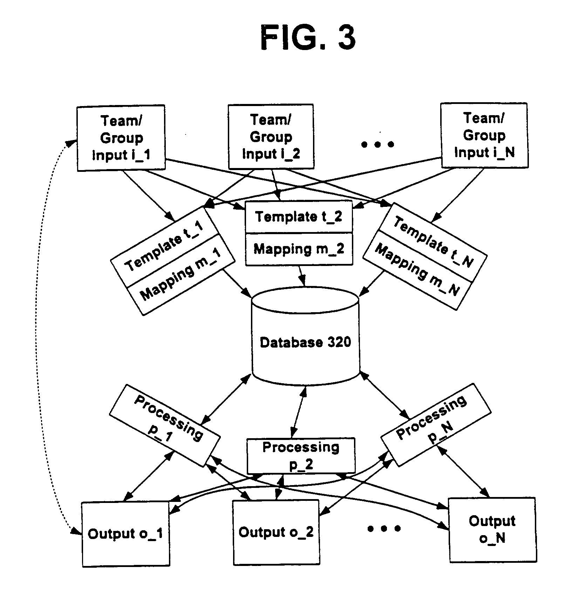

Figure 3 is a block diagram depicting a generalized flow of business process information input to and output from a database 320 in accordance with the present invention. Business process data inputs i_l through i_N are input to database 320 via templates t_l through t_N and mapping elements m_l through m_N. Business process data outputs o_l through o_N receive business process data via processing elements p_l through p_N from database 320. Outputs o_l through o_N and inputs i_l through i_N may occur on the same machine, as suggested by the dashed line. Since a team member may request outputs and since outputs may also be pushed to a team member, bi-directional communications are enabled where appropriate on the output side.

Inputs i_l through i_n come from different groups or teams such that the templates t_l through t_N may be tailored to different groups or teams. For example, each group might represent a different research project team. Since each group or team may handle or collect different types of data at different times and in different formats, the ability to tailor, but nonetheless standardize, the inputting of business process data from different teams and groups via tailored templates t_l through t_N is an advantage of the present invention. This enables more uniform collection of data across multiple business processes without making the inputting of data too rigid to accommodate variations among different groups. Also, inputs i_l through i_N may be exploded to one or more templates to fill in multiple different fields or other data entry portions. After the data passes through templates t_l through t_N, mapping elements m_l through m_N map the data to appropriate data storage location(s). For example, a single data entry point may be mapped to an entire column or row of a spreadsheet while at the same time, the data might be mapped to a word processing document and a graphic.

The present invention may thus tailor the input procedure via templates t_l through t_N to differences in team/group inputs i_l through i_N, while maintaining consistent input to database 320. In this regard, it is an advantage of the present invention that cross-functional business process team members and machines may input varied types of data to the system and have those different types of data normalized against a standard designed for the business process. The following provides an example: a first group may be operating in Europe, while a second group may be operating in the United States. As a result, the first group may wish to enter kilometers for distances while the second group may wish to enter miles for distances. Templates t_l and t_2 could be tailored to accept kilometers and miles, respectively. The data from templates t_l and t_2 could then be processed such that the units of the data stored in database 320 could be made standard. Once the data is input to templates t_l and t_2, mapping elements m_l and m_2 govern to where the data is mapped for storage purposes. Business process data may also be input to templates t_l through t_N from a different machine such as another computer, or portions of inputs i_l through i_N may be fed in combination to a template t_l to t_N. Intelligent analysis of the business process data input to templates t_l through t_N may also indicate that some of the data is irrelevant to the process or otherwise is to be deleted. Deletion of portions of the business process data may be achieved at any time during the flow of data.

Alternatively, the business process data input to templates t_l through t_N could be sent directly to and stored in the database 320 without any pre-processing. Thus, the standardization of the business process data may take place after storage in the database 320. The units of the data, for example, may be made uniform before outputting to outputs o_l through o_N via processing elements p_l through p_N depending upon who (or what machine) will view (or receive) the output data. Thus, outputs o_l through o_N may also be tailored to the recipient of the data. The business process data may be transmitted, e.g., to an email address, a voicemail box or a network storage location, such as an Internet Web page for pickup.

For an example, a management team may wish for a different view of the business process data than the business process group that originated portions of the data in the database. A management team may also be granted access to certain types of outputs o_l through o_N whereas the business process group in general may not have such privileges. Thus, different access or security levels may be assigned to different users to protect sensitive or confidential data and the like and/or to direct different data to different users. These different outputs may be accomplished via different processing techniques implemented in processing units p_l through p_N which may be, for instance, utilized in connection with a database server computer. Additionally, these outputs may be achieved by performing different data processing techniques after inputting and before outputting the business process data. Hence, communications in connection with different cross-disciplinary business process groups' input, output, storage and processing are standardized in accordance with the present invention.

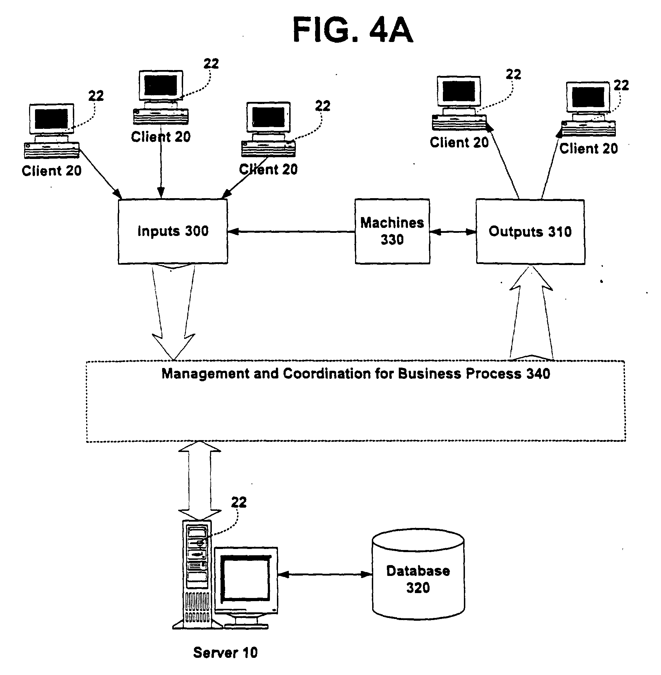

Figure 4A illustrates the present invention in the context of a generic business process for which management and coordination of inputting, outputting, storing and processing of business process data is desirable. As shown in the figure, a dashed rectangle 340 represents a business process that drives or is an integral part of the communications, storage and processing of data in accordance with the present invention. Thus, for example, inputs 300 to the system may come from clients 20 or machines 330, either manually or automatically. The form of the inputs 300 is driven by the business process involved; however, different inputs may follow different formats even for the same business process. Inputs 300 may be generated off-line as well, such that changes may be made to documents and the like off-line and then updated upon reconnection to the network. The data, once input according to a prespecified format driven by the business process shell 340, is then formatted for storage in database 320 serviced by process server 10. In a presently preferred embodiment, inputs are stored in database 320 according to fields and other data identifiers for application of relational database techniques, and are stored in database 320 in one of a plurality of prespecified formats, such as certain types of word processing documents, spreadsheet documents, scheduling documents and graphical files. Once stored, data for the plurality of business processes is processed/ analyzed according to rules that are appropriate to the business process shell 340 and the outputs 310 that are to be by request or automatically generated for business managers and others accessing clients 20 and for machines 330 that may automatically receive such outputs 310.

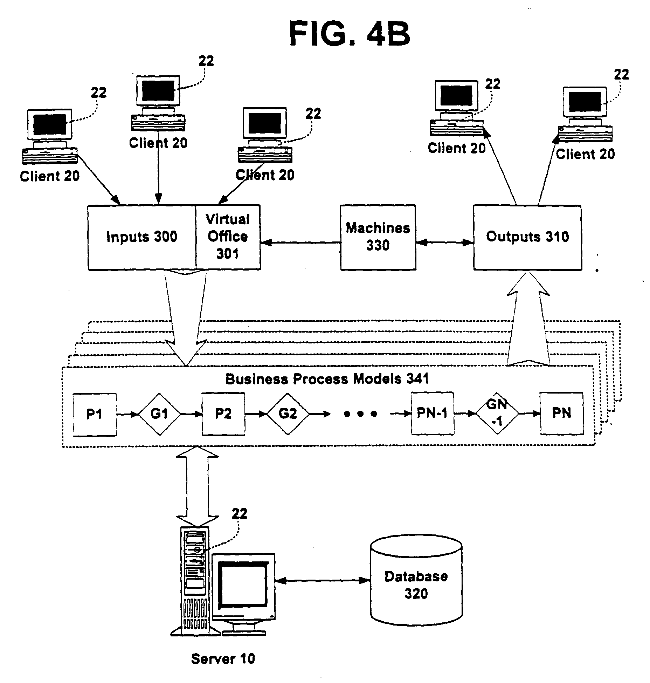

Figure 4B illustrates the present invention in the context of one or more business processes such as a stage/gate, research and development, sales, accounting, engineering or human resources process. For example, one such business process might be a stage/gate model 341 wherein phases p1 to pN have associated decision gates g1 to gN-1. Software 22 may be loaded onto any client machine 20 or server machine 10 for practicing the invention. Preferably, portions of the software 22 of the present invention are located on a server machine 10 connected to a database 320, such as a relational database, whereby users access the project management software 22 via a network. It should also be understood that software 22 may reside entirely on server 10, and a user would access the software 22 via the network 14. A client 20, once granted access to a project's information, based upon an assigned user and/or client profile, may enter or alter existing data either on or off line. The software has built therein pre-set rules based upon the stage/gate model 341, such as risk factors chosen for making decisions at the gates. In this context, risk factors generally involve standard economic concepts such as product costs, technical risk e.g., manufacturing and product/process performance, marketability, value to customers, competitive response, etc. (unique factors for each enterprise). In a preferred embodiment, one or more of these concepts is broken down further to identify more specific risk factors for decision-making. Thus, the types of communications that occur in accordance with the present invention are dependent upon the type of business process being computer network enabled.

From a system perspective, project members enter data, or data is automatically fed into the system from machines 330 or clients 20 when made available via input 300 and/or virtual office 301. While not intended to be limiting, a machine 330 may be a testing machine that generates test data or any other source of data that does not require manual input. As shown, input 300 may include a virtual office 301 wherein users can have access to and input data into a virtual workspace for research data entry providing a common way for team members to share research results and to provide comments. Preferably, a set of rules is established for occurrences where multiple users access to or request access to the same document or data at the same time to avoid multiple versioning conflicts. The virtual office 301 is intended to reduce the hodge podge of types of data that may result from technicians and lab assistants entering data in any fashion desired on an individual basis. By providing a standard way to enter project data, enterprise uniformity is thus achieved. Filtering and other data manipulation of entered data may occur before the prose, text, ideas, etc. entered by team members is stored. In recognition that not all information is useful, a form may be provided to standardize the entry of data and certain types of data may be removed entirely if it is determined to be useless. Data may be stored according to one or more of text, email, audio, video, spreadsheet, scheduling and graphical format.

Reports and other outputs may be output to one or more client machines 20 or machines 330 either automatically e.g., in the case of a project portfolio quarterly report, or by request e.g., for more specific project information. Information can be processed on an enterprise-wide project basis due to the ease with which data can be organized using standard relational database techniques via searchable fields and the like. Additionally, as a result of processing the business process data, success and failure rates of components of the business process may be determined. These success and failure rates may then be attached to the corresponding components so that future use of those components may take into account their probability or probabilities of success. For example, if successful research and development consistently involves 2 or 3 key employees, those 2 or 3 key employees can be identified and placed strategically on future projects. Staffing success rates, however, are just one example of this. There are numerous variables that contribute to the success or failure of a business process, and each one may be quantified to the extent possible in accordance with the present invention. Thus, the system and methods of the present invention facilitate both optimizing individual business processes and streamlining operations across business processes.

In the context of the product development cycle following a stage/gate model 341, the present invention seeks to reduce project risk as the product development proceeds from p1 to pN, with a reduction in risk and uncertainty as the product advances from one stage to the next. With inputs coming from a plurality of sources identifying a gamut of factors affecting the product's feasibility, such as salability, health and safety considerations, etc., a project's team leaders have a standard way to analyze the process of product development and to ensure its success with greater probability during product development. In a presently preferred embodiment, 29 risk factors have been identified belonging to 5 categories of risk factors. Early stage assumptions are made where uncertainty is high. The goal of the risk factor analysis is to determine which risk factors have the most uncertainty associated therewith so that weak links in the product development chain can be identified and thus focused upon by the business unit so as to maximize a product's probability of success.

Some of the data may come from team members entering data directly to the system via a client 20 while other data may be automatically entered from other sources. This other data might include market conditions such as a consumer confidence index, or any useful statistic or data point that the enterprise regards as useful information in terms of reducing risk as a product is developed. Documents, once created, may be routed to output 310 so that the appropriate people receive the data for review or alteration. This may be done automatically or the user may choose to whom the documents are routed. Standardized monthly reports may also be automatically generated and routed to the appropriate people of the business unit. Since the business process data store 320 is continuously updated in real-time, outputs 310 are reflective of the most current set of data whenever generated.

In the case where communications network 14 is the Internet, the process portfolio may be accessed from a variety of client machines 20 and data may be entered and reports may be generated from anywhere. As mentioned, communications network 14 may be an intranet or any other secure network for practicing the invention. The software may be tailored to a variety of business processes, enterprises and industries, including but not limited to activities in connection with research and development, sales, accounting, engineering, software development, technical service, marketing, strategic planning and human resources. Generally, such considerations entering into decision-making for a business process, such as assumptions and risk factors that may be applicable to a certain industry, such as the pharmaceutical industry, may also apply or be minimally altered to apply to other organizations. Consequently, the software is readily modifiable to accommodate any number of industries and enterprise assumptions and identifiable product risk factors.

The software 22 of the present invention generally will be tailored to the business process being computer network enabled. For example, the types and frequencies for allowable inputs, fields used for storage, processing of data and formatting of outputs from the present invention will be driven by the type of business process. If it is a human resources business process, the inputs, outputs, storage and processing of data will be oriented towards human resource data. For example, computer inputs would be driven by an already existing standard employee data form. Storage of data would adhere to fields such as name, social security number, previous employer, etc. Data could be processed and outputs could be tailored to different individuals depending upon the purpose for viewing the human resource data.

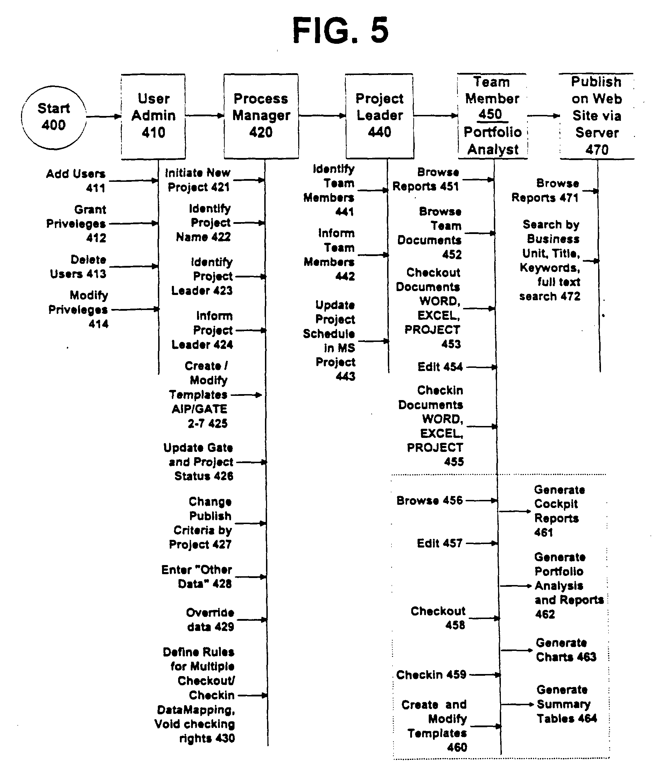

To illustrate in greater detail a business process management system in the context of R&D projects, Fig. 5 is a flow diagram representing exemplary communications of an embodiment of project management system software developed in accordance with the present invention. With reference to Fig. 2, software bits 22a, 22b, 22c, 22d, 22e, etc. in accordance with the present invention may be located in clients 20 and servers 10 in order to implement the communications between clients and servers in accordance with a business process. Any one of software bits 22a, 22b, 22c, 22d, 22e, etc. may include one or more of start module 400, user administration module 410, process manager module 420, project leader module 440, team member/portfolio analyst module 450 and publish on a Web Site via Server module 470. After start module 400, wherein initialization of or entry into the system and the like is performed, exemplary inputs for user administration module 410 include the entry of additional users of the system 411, the granting of privileges for users of the system 412, the deletion of users 413 and the modification of privileges 414.

The process manager module 420 may include functionality such as allowing a user to initiate a new project 421, identify a project name 422, identify who the project leader is 423, inform the project leader about something 424, create or modify business process specific input templates 425, update project status 426, change project's publishing criteria 427, enter some type of other data 428, override data (e.g., to resolve a version conflict) 429 and define rules to deal with the situation where multiple people try to access or modify the same data in parallel 430 (e.g., create data mappings between altered data and users).

The project leader module 440 allows project leaders to perform functions that others may not such as identify team members 441, inform one or more team members of something 442 and update project schedule in scheduling software 443.

The team member/portfolio analyst module 450 is two tiered in the figure, the top portion 451 to 455 being for a team member and the dashed box portion 456-464 being for a analyst of the process portfolio (a tailored collection of data concerning all business processes). This module 450 is thus a vehicle for access to the business process data stored in database 320. A team member may, for example, browse reports 451, browse team documents 452, check out documents for work off-line 453, edit a document 454 and check in a document that has been checked out 455. A portfolio analyst may browse through the data 456, edit the data 457, check out a document 458, check in a document 459, create and modify a template 460. Outputs that may be generated by or for the portfolio analyst may include the generation of cockpit reports 461, the generation of portfolio analysis and portfolio reports 462, the generation of charts 463 and the generation of summary tables 464.

While data may be input according to tailored templates, such as templates t_l through t_N, so that data may be entered in a format that is suited to a particular group's needs and requirements, and while data may be output according to any format via processing elements p_l through p_N to suit the data recipient's needs and requirements, the data are stored in database 320 in common formats in accordance with the present invention. For example, in a preferred embodiment, the business process data are stored in at least one of a word processing document, scheduling document, spreadsheet document and graphical file.

Thus, the software of the present invention automates inputs, outputs, storage and processing of data for use in connection with business process management and coordination. For example, once a particular set of data is captured in the system, that packet of data may be exploded throughout the system automatically to update other portions of data in the system upon which the particular set of data has a bearing. This could be used to automate any sort of repetitive or tedious data entry task. Further, data can be edited on or off-line and rules may be input to determine priority during check in or check out procedures. Voluminous amounts of data and documents can be stored and catalogued efficiently, so that data stay easily accessible and history is preserved. Cockpit spreadsheets and portfolio analysis spreadsheets are continuously updated and may be generated at anytime or by schedule. A risk model may be incorporated into business process decision-making. Also, as will be explained in more detail below, the system software of the present invention provides unique data analysis capabilities including dynamic updates and revisions based upon bugs (defects) and wishes for additional or other software functionality. It is also noted that the above sub-modules are listed for exemplary purposes only, and that a variety of sub-modules could be written for the purpose of tailoring data gathered and output in connection with a business process, such as research and development.

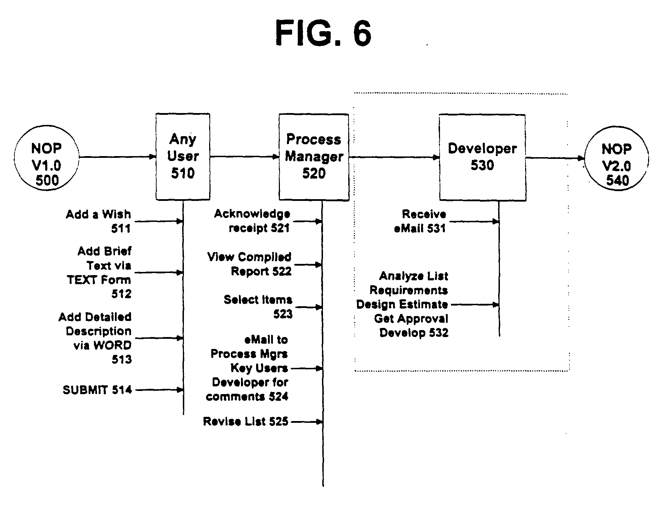

Fig. 6 is a flow diagram representing dynamic functionality for the software 22 of the present invention whereby a user can enter wishes based upon functionality that would be desirable or notify a system administrator of a system bug based upon an imperfection observed during use. Risk factors or other assumptions made for purposes of decision-making may also be retrospectively analyzed to improve the project management system or process portfolio of the present invention. Thus, the present invention lends itself to an intelligent, retrospective diagnostic analysis to determine whether the system can be 'tweaked' to make it even better based upon experience. For example, software 22 may automatically compile and track wish lists and bug lists, provide users with a mechanism to express wishes for the system software 22, capture/track information about wishes and bugs systematically and automatically whether they occur or are input off-line or online and transfer wish and bug lists to a Web based discussion point for a more democratic discourse on the desirability of changing the software 22 based on a bug or a wish.

For example, a first or current version of software 22 is at 500 and a revised version is at 540. In between 500 and 540 is the process by which the revision takes place. A module 510 includes the functionality whereby any user may add a wish 511, add brief text via a text form 512, for example, to accompany the wish addition, add a detailed description via a word processing document 513 and submit the wish to the wish list at 514. A process manager module 520 may govern the acknowledgment of receipt of a wish 521, the viewing of compiled reports 522, the selection of items from the 523, emailing process managers, key users and developers for comments 524 and the revision of the wish and bug lists. Outside of this process are the developers 530 who may receive emails regarding wishes or bugs 531 and analyze wish and bug list design requirements/ obtain approval to make revision 532. Once such approval is obtained, the developers 530 may produce the revised version 540. As mentioned above, a web-based forum may be created for the discussion of appropriate modifications to the software 22 of the present invention. Wishes for the software of the present invention may be input to a computer network from any client computer and may be transmitted to a developer for modification of the software in accordance with the wishes. A kind of wish is the correction of a defect. In this regard, a defect may trigger the transmission of defect information to a developer for modification of the software to correct the defect.

The various techniques described herein may be implemented with hardware or software or, where appropriate, with a combination of both. It is widely appreciated that many electrical devices may be implemented in software, firmware or hardware and thus references to software should not be construed to be limited thereto. The methods and apparatus of the present invention, or certain aspects or portions thereof, may take the form of program code (*i.e.,* instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computer will generally include a processor, a storage medium readable by the processor (including volatile and non-volatile memory and/or storage elements), at least one input device, and at least one output device. One or more programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

The methods and apparatus of the present invention may also be embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, the machine becomes an apparatus for practicing the invention. When implemented on a general-purpose processor, the program code combines with the processor to provide a unique apparatus that operates to perform the indexing functionality of the present invention. For example, the storage techniques used in connection with the present invention may invariably be a combination of hardware and software.

While the present invention has been described in connection with the preferred embodiments of the various figures, it is to be understood that other similar embodiments may be used or modifications and additions may be made to the described embodiment for performing the same function of the present invention without deviating therefrom. For example, while standard word processing, spreadsheet, scheduling and/or graphics files may be used for input and storage in accordance with the present invention, any file or stream of data suitable to a particular business process may be used. Also, it should be understood that many different communications and network protocols may be suited to the generation and storage of standardized business process data in accordance with the present invention. Furthermore, it should be emphasized that a variety of computer platforms, including handheld device operating systems and other application specific operating systems are contemplated. Therefore, the present invention should not be limited to any single embodiment, but rather construed in breadth and scope in accordance with the appended claims.

## Claims

1. A method for an organization or a group of organizations to manage at least one business process, comprising the steps of:
inputting business process data from cross-functional data entry sources from at least one client computer into a computer network;
storing said business process data in a database according to at least one format tailored to said at least one business process;
updating said business process data in said database as additional business process data is input according to said inputting step;
processing said business process data based upon predetermined rules and decision-making criteria designed to streamline said business process; and
outputting at least one portion of said processed business process data in connection with said business process.

2. A method according to claim 1, wherein said outputting step includes the step of transmitting said business process data to at least one of an email address, a voicemail box and a network storage location.

3. A method according to claim 1, further comprising a data mapping step wherein data input in said inputting step is mapped to at least one field in said database according to pre-set criteria for the type of data.

4. A method according to claim 1, wherein said inputting step includes the step of inputting business process data relating to activity for at least one of research and development, sales, accounting, engineering, software development, technical service, marketing, strategic planning and human resources.

5. A method according to claim 1, wherein said inputting step includes the step of inputting data into a virtual office whereby data can be entered from at least one of a plurality of geographically disperse locations according to a standard format for storage in said database.

6. A method according to claim 1, wherein said outputting step includes the step of outputting data to at least one of a plurality of geographically disperse locations according to a format that is tailored to said at least one geographically disperse location.

7. A method according to claim 1, wherein said processing step includes the step of processing business process data based on one of a stage/gate decision-making model, a phase/gate decision-making model, a serial decision-making model, and a phase/review decision-making model.

8. A method according to claim 1, wherein said processing step includes the step of processing business process data based on risk factors and other criteria.

9. A method according to claim 1, wherein said processing step includes the step of routing input business process data to other applications and data stores that are affected by the business process data.

10. A method according to claim 1, wherein said outputting step includes the step of outputting standardized reports and transmitting said business process data to at least one of an email address, a voicemail box and a network storage location.

11. A method according to claim 1, wherein said step of inputting business process data is performed off-line and changes to the business process data are updated in said database upon reconnection to said computer network in accordance with pre-set rules.

12. A method according to claim 1, wherein said step of inputting business process data includes the step of automatically inputting data from at least one machine.

13. A method according to claim 1, wherein said step of storing said business process data includes the step of storing the data in at least one of a text, email, audio, video, spreadsheet, scheduling and graphical format.

14. A computer-readable medium having computer-executable instructions for instructing a computer to perform the steps recited in claim 1.

15. A computer-readable medium according to claim 14, wherein a wish for said instructions is input into said computer network from said at least one client computer and is transmitted to a developer for modification of said instructions in accordance with said wish.

16. A computer-readable medium according to claim 14, wherein a defect in said instructions triggers the transmission of defect information over said computer network to a developer for modification of said instructions to correct said defect.

17. A modulated data signal for carrying information that encodes computer-executable instructions for instructing a computer to perform the steps recited in claim 1.

18. A computer system for managing at least one business process of an organization or group of organizations, comprising:
at least one client computer;
at least one server computer, wherein said at least one server computer receives standardized cross-functional business process data input to said at least one client computer and processes said business process data based upon predetermined rules and decision-making criteria designed to streamline said at least one business process, and wherein said at least one server computer outputs reports and other documents to said at least one client computer based upon access levels and predetermined routing for said reports and documents; and
a database operatively coupled to said at least one server computer for storing said business process data.

19. A computer system according to claim 18, wherein said business process data is data for use in connection with one of a stage/gate decision-making model, a phase/gate decision-making model, a serial decision-making model, and a phase/review decision-making model.

20. A computer system for managing a plurality of business processes of an organization or group of organizations, comprising:
at least one server computer, wherein said at least one server computer receives standardized cross-functional business process data via a computer network and processes said business process data based upon predetermined rules and decision-making criteria designed to streamline said plurality of business processes, and wherein said at least one server computer outputs reports and other documents via said computer network to decision-makers making decisions in connection with said plurality of business processes; and
a database operatively coupled to said at least one server computer for storing said business process data received via said computer network.

21. A computer system according to claim 20, wherein said business process data is data for use in connection with one of a stage/gate decision-making model, a phase/gate decision-making model, a serial decision-making model, and a phase/review decision-making model.

22. A method for analyzing a portfolio for an organization or group of organizations in real-time to manage organizational resources, comprising the steps of:
inputting business process data from cross-functional data entry sources for a plurality of business processes in a format tailored to said plurality of business process into a computer network from at least one client computer;
storing said business process data in a database according to said format;
updating said data in said database as additional business process data is input according to said inputting step;
processing said business process data in said database in accordance with predetermined algorithms that extract business process resource management information across said plurality of business processes; and
outputting said business process resource management information for use in analysis of said portfolio.

23. A method according to claim 22, wherein said outputting step includes the step of transmitting said business process data to at least one of an email address, a voicemail box and a network storage location.

24. A method according to claim 22, further comprising a data mapping step wherein data input in said inputting step is mapped to at least one field in said database according to pre-set criteria for the type of data.

25. A method according to claim 22, wherein said processing step includes the step of processing business process data based on risk factors and other criteria.

26. A method according to claim 22, wherein said inputting step includes the step of inputting business process data relating to activity for at least one of research and development, sales, accounting, engineering, software development, technical service, marketing, strategic planning and human resources.

27. A method according to claim 22, wherein said processing step includes the step of determining the allocation of resources used in a plurality of business processes.

28. A method according to claim 22, wherein said processing step is performed when said business process data in said database is updated according to said updating step.

29. A method according to claim 22, wherein said step of storing said business process data includes the step of storing business process data in at least one of a text, email, audio, video, spreadsheet, scheduling and graphical format.

30. A method according to claim 22, wherein said processing step includes the step of determining success and failure rates of at least one variable component of said business process.

31. A computer-readable medium having computer-executable instructions for instructing a computer to perform the steps recited in claim 22.

32. A computer-readable medium according to claim 31, wherein a wish for said instructions is input into said computer network from said at least one client computer and is transmitted to a developer for modification of said instructions in accordance with said wish.

33. A computer-readable medium according to claim 31, wherein a defect in said instructions triggers the transmission of defect information over said computer network to a developer for modification of said instruction to correct said defect.

34. A modulated data signal for carrying information that encodes computer-executable instructions for instructing a computer to perform the steps recited in claim 22.
